Europäisches Patentamt

European Patent Office

Office européen des brevets

(19)

(11) **EP 1 461 173 B1**

(12) **EUROPÄISCHE PATENTSCHRIFT**

(45) Veröffentlichungstag und Bekanntmachung des Hinweises auf die Patenterteilung:
**08.06.2005 Patentblatt 2005/23**

(21) Anmeldenummer: **01274884.4**

(22) Anmeldetag: **07.12.2001**

(51) Int Cl.⁷: **B22C 1/18**, A61C 13/20

(86) Internationale Anmeldenummer:
**PCT/IB2001/002358**

(87) Internationale Veröffentlichungsnummer:
**WO 2003/047790 (12.06.2003 Gazette 2003/24)**

(54) **GIESSFORMSTOFF FÜR DIE HERSTELLUNG VON GUSSFORMEN ZUM GIESSEN VON WERKSTOFFEN MIT HOHEM SCHMELZPUNKT**

CASTING MATERIAL FOR PRODUCING CASTING MOLDS FOR CASTING HIGH-MELTING POINT MATERIALS

MATERIAU POUR FABRIQUER DES MOULES SERVANT AU COULAGE DE MATIERES A POINT DE FUSION ELEVE

(84) Benannte Vertragsstaaten:
**AT BE CH CY DE DK ES FI FR GB GR IE IT LI LU MC NL PT SE TR**

(43) Veröffentlichungstag der Anmeldung:
**29.09.2004 Patentblatt 2004/40**

(73) Patentinhaber:
• **Schütz-Dental GmbH**
**61191 Rosbach (DE)**
• **FRAUNHOFER-GESELLSCHAFT ZUR FÖRDERUNG DER ANGEWANDTEN FORSCHUNG E.V.**
**80636 München (DE)**

(72) Erfinder:
• **RABE, Susanne**
**64297 Darmstadt (DE)**

• **EISELT, Wolfgang**
**63533 Mainhausen (DE)**
• **LENK, Reinhard**
**01328 Dresden (DE)**
• **RICHTER, Hans-Jürgen**
**01257 Dresden (DE)**

(74) Vertreter: **Lusuardi, Werther Giovanni, Dr. Dr. Lusuardi AG, Kreuzbühlstrasse 8 8008 Zürich (CH)**

(56) Entgegenhaltungen:
**EP-A- 0 433 546        EP-A- 0 733 419**
**DE-A- 4 210 004        DE-A- 19 607 380**

**Beschreibung**

Die Erfindung betrifft einen Giessformstoff für die Herstellung von Gussformen zum Giessen von Werkstoffen mit hohem Schmelzpunkt gemäss dem Oberbegriff des Patentanspruchs 1.

Der Giessformstoff besteht aus einer Pulver- und einer Flüssigkeitskomponente, die zu einem fliessfähigen Schlicker angerührt und nach Trocknung und Aushärtung anschliessend gesintert, zur Erstellung einer Hohlform dient. Die so erhaltene Keramikform wird mit geschmolzenem Metall, vorzugsweise geschmolzenem Titan oder Titanlegierungen gefüllt. Nach Entfernung der Form sollen detailgenaue Gussobjekte entstehen.

Der Giessformstoff eignet sich zum Vergiessen von Titan und Titanlegierungen, insbesondere für dentalmedizinische Anwendungen, woraus passgenaue Zahnkronen, Zahnbrücken und Modellgüsse mit ausgezeichneter Oberfläche und ohne Gaseinschlüsse resultieren. Da der geschmolzene Werkstoff nach dem Eingiessen in die Gussform während des Erstarrens schrumpft, muss die keramische Hohlform nach dem Sintervorgang um den gleichen Betrag expandiert sein. Dieses Aufmass erreicht man durch eine oder mehrere expandierende Komponenten in dem Giessformstoff.

Titan und Titanlegierungen schrumpfen beim Abkühlen erheblich weniger als handelsübliche Dentallegierungen, wie z.B. Gold- oder Chrom-Kobalt-Legierungen. Bei den für diese Legierungen verwendeten, bekannten Einbettmassen erfolgt die Expansionskompensation durch Zugabe von Ammoniumdihydrogenphosphat, welches mit Magnesiumoxid zu grossvolumigen Kristallen aus $MgNH_4PO_4x6H_2O$ reagiert und durch Phasenumwandlung von Siliziumdioxid. Es ist vorteilhaft auf Quarze und Phosphate in einer Titan-Einbettmasse zu verzichten, da diese Verbindungen mit der Titanschmelze reagieren.

EP-A-0 433 546 offenbart ein silicafreies Gießformmaterial zum Giessen vom Titanmodellgüssen, wobei das Material Aluminium- und Zirkoniumoxid enthält, mit Magnesiumoxid und Phosphat als Bindemittel.

Der Erfindung liegt die Aufgabe zugrunde, einen Giessformstoff zu schaffen, welcher giessfähiger, universaler einsetzbar sowie zeit- und kostensparender ist als die zum Stand der Technik gehörenden, bekannten Giessformstoffe.

Die Erfindung löst die gestellte Aufgabe mit einem Giessformstoff, welcher die Merkmale des Anspruchs 1 aufweist.

Beim erfindungsgemässen Giessformstoff erfolgt die Expansion durch die Bildung von Spinell, oberhalb von ungefähr 850°C im Vorwärmofen. Der erfindungsgemässe Giessformstoff besitzt - im Vergleich zum Stand der Technik - eine viel bessere Fliessfähigkeit, eine höhere Grünhärte und ein schnelleres Abbindeverhalten. Er hat den weiteren Vorteil, dass er nicht nur zum Guss von Zahnkronen und Zahnbrücken geeignet ist, sondern als Universaleinbettmasse auch für Speed- und Modellguss verwendbar ist.

Die bessere Fliessfähigkeit des erfindungsgemässen Giessformstoffes wird hauptsächlich durch den Polyelektrolyten bewirkt. Die höhere Grünfestigkeit und damit die Möglichkeit zum Einsatz für den Modellguss wird durch das Calciumaluminat erreicht. Die Geschwindigkeit des Abbindens wird u.a. durch das Calciumaluminat sowie die Inhaltsstoffe der Flüssigkeitskomponente bestimmt. Die bessere Thermoschockbeständigkeit wird durch das Zirkonoxid bewirkt.

Eine bevorzugte Ausführungsform der Erfindung besteht darin, dass die Pulverkomponente des Giessformstoffes zusätzlich Spinell enthält, zweckmässigerweise in einer Menge von 0,1 - 20,0 Gew.-%, vorzugsweise von 1 - 10 Gew.-%. Mit der Beimischung von Spinell kann gezielt auf die Expansion Einfluss genommen werden. Der Spinell weist zweckmässigerweise eine mittlere Korngrösse $d_{50}$ von 3 bis 20 µm, vorzugsweise 8 bis 12 µm auf.

Die Pulverkomponente enthält zweckmässigerweise 40 - 60 Gew.-%, vorzugsweise 45 - 55 Gew.-% Magnesiumoxid, sowie 15 - 30 Gew.-%, vorzugsweise 21 - 29 Gew.-% Aluminiumoxid.
Im weiteren kann die Pulverkomponente zweckmässigerweise 0,5 - 20,0 Gew.-%, vorzugsweise 1 - 10 Gew.-% Zirkonoxid enthalten. Dadurch ergibt sich nach dem Sintern eine erhöhte mechanische Festigkeit und Härte sowie eine erhöhte thermische Beständigkeit.

Das Calciumaluminat in der Pulverkomponente sollte zweckmässigerweise in einer Menge von 5 - 30 Gew.-%, vorzugsweise 10 - 20 Gew.-% vorhanden sein. Dadurch erhält man eine höhere Grünfestigkeit und eine verbesserte Steuerung des Abbindungsvorgangs.

Schliesslich kann die Pulverkomponente zweckmässigerweise 0,5 - 20,0 Gew.-%, vorzugsweise 1 - 10 Gew.-% Lithiumfluorid enthalten, um damit eine höhere Grünfestigkeit zu erzielen.

Der in der Flüssigkeitskomponente enthaltene Polyelektrolyt kann eine Polycarbonsäure, vorzugsweise eine Polyacrylsäure oder Polymethacrylsäure, oder eines ihrer Salze sein. Er sollte zweckmässigerweise in einer Menge von 0,2 - 10,0 Gew.-%, vorzugsweise von 0,5 - 3,0 Gew.-% vorhanden sein.

Im weiteren sollte die Flüssigkeitskomponente zweckmässigerweise 0,5 - 10,0 Gew.-%, vorzugsweise 1 - 9 Gew.-% an basischer Komponente, vorzugsweise ein Alkalihydroxid (z.B. Lithiumhydroxid) enthalten.

Bei einer bevorzugten Ausführungsform wird das Magnesiumoxid in grober und feiner Form verwendet, wobei die grobe Form eine mittlere Korngrösse $d_{50}$ von 100 bis 170 µm, vorzugsweise 110 bis 140 µm aufweist und die feine Form eine mittlere Korngrösse $d_{50}$ kleiner als 10 µm, vorzugsweise 3 bis 7 µm aufweist. Das feine Magnesiumoxid bewirkt ein schnelleres Abbindeverhalten und das grobe Magnesiumoxid eine bessere Thermoschockbeständigkeit. Das Gewichtsverhältnis zwischen grobem und feinem Magnesiumoxid sollte zweckmässigerweise 9:1 bis 5:1, vorzugsweise 8:1 bis 6:1 betragen.

Das in der Pulverkomponente verwendete Aluminiumoxid sollte zweckmässigerweise eine mittlere Korngrösse $d_{50}$ von 3 bis 15 µm, vorzugsweise von 5 bis 10 µm aufweisen.

Das in der Pulverkomponente vorzugsweise zu verwendende Zirkonoxid sollte zweckmässigerweise eine mittlere Korngrösse $d_{50}$ von 3 bis 15 µm, vorzugsweise von 5 bis 10 µm aufweisen.

Das in der Pulverkomponente verwendete Calciumaluminat sollte zweckmässigerweise eine mittlere Korngrösse $d_{50}$ von 5 bis 20 µm, vorzugsweise 8 bis 12 µm aufweisen.

Die Flüssigkeitskomponente besteht zweckmässigerweise aus Wasser, vorzugsweise entionisiertem oder destilliertem Wasser, zu welchem noch ein Alkohol mit einem Siedepunkt unter 100 °C beigegeben werden kann, vorzugsweise, Ethanol, 1-Propanol, 2-Propanol oder tert. Butylalkohol. Da der Alkohol leichter verdunstet als das Wasser, ergibt sich dadurch eine bessere Trocknung.

Die Erfindung und Weiterbildungen der Erfindung werden im folgenden anhand mehrerer Ausführungsbeispiele noch näher erläutert.

Beispiel 1

| Pulverkomponente (alle Angaben in Gew-%) | |
|---|---|
| Magnesiumoxid | 51,5 |
| Aluminiumoxid | 25,0 |
| Zirkonoxid | 4,0 |
| Calciumaluminat | 14,5 |
| Lithiumfluorid | 4,0 |
| Spinell | 1,0 |
| | 100,0 |

| Flüssigkeitskomponente (alle Angaben in Gew-%) | |
|---|---|
| Lithiumhydroxid | 2,0 |
| Natriumsalz der Polyacrylsäure | 2,0 |
| Wasser | 96,0 |
| | 100,0 |

Das Anmischverhältnis beträgt 100 g Pulverkomponente mit 18 ml Flüssigkeitskomponente. Die Anmischzeit beträgt 60 Sekunden. Die Abbindezeit beträgt 45 Minuten.

Beispiel 2

| Pulverkomponente (alle Angaben in Gew-%) | |
|---|---|
| Magnesiumoxid | 55,5 |
| Aluminiumoxid | 21,0 |
| Zirkonoxid | 3,0 |
| Calciumaluminat | 13,0 |
| Lithiumfluorid | 5,5 |
| Spinell | 2,0 |
| | 100,0 |

| Flüssigkeitskomponente (alle Angaben in Gew-%) | |
|---|---|
| Lithiumhydroxid | 1,0 |
| Polymethacrylsäure | 0,7 |
| Isopropanol | 4,0 |
| Wasser | 94,3 |
| | 100,0 |

Das Anmischverhältnis beträgt 200 g Pulverkomponente mit 37 ml Flüssigkeitskomponente. Die Anmischzeit beträgt 45 Sekunden und die Abbindezeit beträgt 40 Minuten.

Beispiel 3

| Pulverkomponente (alle Angaben in Gew-%) | |
|---|---|
| Magnesiumoxid | 52,0 |
| Aluminiumoxid | 23,0 |
| Zirkonoxid | 6,0 |
| Calciumaluminat | 11,5 |
| Lithiumfluorid | 7,0 |
| Spinell | 0,5 |
| | 100,0 |

| Flüssigkeitskomponente (alle Angaben in Gew-%) | |
|---|---|
| Lithiumhydroxid | 1,0 |
| Polymethacrylsäure | 1,5 |
| Isopropanol | 3,0 |
| Wasser | 94,5 |
| | 100,0 |

Das Anmischverhältnis beträgt 100 g Pulverkomponente mit 18 ml Flüssigkeitskomponente. Die Anmischzeit beträgt 45 Sekunden. Die Abbindezeit beträgt 40 Minuten.

Beispiel 4

| Pulverkomponente (alle Angaben in Gew-%) | |
|---|---|
| Magnesiumoxid | 50,0 |
| Aluminiumoxid | 25,0 |
| Zirkonoxid | 5,0 |
| Calciumaluminat | 12,0 |
| Lithiumfluorid | 4,0 |
| Spinell | 4,0 |
| | 100,0 |

| Flüssigkeitskomponente (alle Angaben in Gew-%) | |
|---|---|
| Lithiumhydroxid | 1,0 |
| Na-Salz einer Polyacrylsäure | 3,0 |

(fortgesetzt)

| Flüssigkeitskomponente (alle Angaben in Gew-%) | |
|---|---|
| Wasser | 96,0 |
| | $\overline{100,0}$ |

Das Anmischverhältnis beträgt 200 g Pulverkomponente mit 37 ml Flüssigkeitskomponente. Die Anmischzeit beträgt 60 Sekunden. Die Abbindezeit beträgt 45 Minuten.

Zur Herstellung des erfindungsgemässen Giessformstoffes werden die Pulverkomponente und die Flüssigkeitskomponente gemäss einem der obengenannten Beispiele 1 bis 4 miteinander vermischt oder geknetet. Die Flüssigkeitskomponente enthält einen Polyelektrolyten, der dafür sorgt, dass der Giessformstoff zunächst gut fliessfähig ist. Nach dem Anrühren entsteht deshalb eine flüssige, giessbare Masse, mit der man das aus Wachs oder aus rückstandsfrei verbrennendem Kunststoff bestehende Urmodell des Gusskörpers umgiesst. Die Verfestigung der flüssigen Masse erfolgt unter anderem durch hydraulisches Abbinden des Calciumaluminats. Die Geschwindigkeit der Abbindung der flüssigen Masse lässt sich durch die Menge des Calciumaluminats- und des Magnesiumoxids sowie die Zusammensetzung der Flüssigkeitskomponente so einstellen, dass sich die Masse bequem verarbeiten lässt und dennoch eine sehr kurze Abbindezeit erreicht wird.

Die Masse wird nach dem Abgiessen an einem warmen und vibrationsfreien Ort mindestens 45 Minuten lang abbinden gelassen. Nach ca. 45 Minuten kann die abgebundene Masse in einen geeigneten Vorwärmofen gestellt und das Ofenprogramm zur Sinterung der Einbettmasse gestartet werden. Während dieser Phase, die ca. 6 Stunden benötigt, werden Wachse, Kunststoffe und Wasser ausgetrieben und es erfolgt die Spinellexpansion.

Das Ofenprogramm besteht z.B. aus einer Aufheizphase mit einem Temperaturgradienten von 4 Kelvin/Minute bis eine Temperatur von 300 °C erreicht wird, einem 30-minütigen Verweilen bei 300 °C, einer weiteren Aufheizphase mit 7 Kelvin/Minute bis eine Temperatur von 900°C erreicht wird, einem 30-minütigen Verweilen bei 900°C und einer Abkühlphase bis auf 450°C. Dann wird die gesinterte Hohlform bei einer Gusstemperatur von 450°C in einem Vakuumdruckgussgerät unter Schutzgas mit geschmolzenem Titan gefüllt.

**Patentansprüche**

1. Giessformstoff für die Herstellung von Gussformen zum Giessen von Werkstoffen mit hohem Schmelzpunkt, welcher

   A) eine Pulverkomponente, die Magnesiumoxid und Aluminiumoxid enthält; und
   B) eine Flüssigkeitskomponente umfasst,
   **dadurch gekennzeichnet, dass**
   C) die Pulverkomponente zusätzlich ein Calciumaluminat und ein Alkali- oder Erdalkali-Fluorid enthält; und
   D) die Flüssigkeitskomponente einen Polyelektrolyten und eine basische Komponente enthält, wobei die basische Komponente den pH-Wert der Flüssigkeitskomponente zwischen 10 und 14 einstellt.

2. Giessformstoff nach Anspruch 1, **dadurch gekennzeichnet, dass** die Pulverkomponente zusätzlich Zirkonoxid enthält.

3. Giessformstoff nach Anspruch 1 oder 2, **dadurch gekennzeichnet, dass** die basische Komponente ein Alkalihydroxid, vorzugsweise Lithiumhydroxid umfasst.

4. Giessformstoff nach einem der Ansprüche 1 bis 3, **dadurch gekennzeichnet, dass** die Pulverkomponente zusätzlich Spinell enthält.

5. Giessformstoff nach einem der Ansprüche 1 bis 4, **dadurch gekennzeichnet, dass** das Alkalifluorid Lithiumfluorid oder Natriumfluorid ist.

6. Giessformstoff nach einem der Ansprüche 1 bis 5, **dadurch gekennzeichnet, dass** die basische Komponente den pH-Wert der Flüssigkeitskomponente zwischen 11 und 13 einstellt.

7. Giessformstoff nach einem der Ansprüche 1 bis 6, **dadurch gekennzeichnet, dass** die Pulverkomponente 0,5 - 20,0 Gew.-%, vorzugsweise 1 - 10 Gew.-% Zirkonoxid enthält.

**8.** Giessformstoff nach einem der Ansprüche 1 bis 7, **dadurch gekennzeichnet, dass** die Pulverkomponente 5,0 - 30,0 Gew.-%, vorzugsweise 10 - 20 Gew.-% Calciumaluminat enthält.

**9.** Giessformstoff nach einem der Ansprüche 1 bis 8, **dadurch gekennzeichnet, dass** die Pulverkomponente 0,5 - 20,0 Gew.-%, vorzugsweise 1 - 10 Gew.-% Alkali- oder Erdalkalifluorid enthält.

**10.** Giessformstoff nach einem der Ansprüche 1 bis 9, **dadurch gekennzeichnet, dass** die Pulverkomponente 0,1 - 20,0 Gew.-%, vorzugsweise 1 - 10 Gew.-% Spinell enthält.

**11.** Giessformstoff nach einem der Ansprüche 1 bis 10, **dadurch gekennzeichnet, dass** die Flüssigkeitskomponente 0,2 - 10,0 Gew.-%, vorzugsweise 0,5 - 3,0 Gew.-% Polyelektrolyt enthält.

**12.** Giessformstoff nach einem der Ansprüche 1 bis 11, **dadurch gekennzeichnet, dass** die Flüssigkeitskomponente 0,5 - 10,0 Gew.-%, vorzugsweise 1 - 9 Gew.-% an basischer Komponente, vorzugsweise Alkalihydroxid, enthält.

**13.** Giessformstoff nach einem der Ansprüche 1 bis 12, **dadurch gekennzeichnet, dass** der Polyelektrolyt eine Polycarbonsäure, vorzugsweise eine Polyacrylsäure oder Polymethacrylsäure, oder eines ihrer Salze enthält.

**14.** Giessformstoff nach einem der Ansprüche 1 bis 13, **dadurch gekennzeichnet, dass** das Magnesiumoxid in grober und feiner Form vorliegt, wobei die grobe Form eine mittlere Korngrösse $d_{50}$ von 100 bis 170 µm, vorzugsweise 110 bis 140 µm aufweist und die feine Form eine mittlere Korngrösse $d_{50}$ von kleiner als 10 µm, vorzugsweise 3 bis 7 µm aufweist.

**15.** Giessformstoff nach Anspruch 14, **dadurch gekennzeichnet, dass** das Magnesiumoxid in grober und feiner Form im Gewichtsverhältnis 9:1 bis 5:1, vorzugsweise 8:1 bis 6:1 vorliegt.

**16.** Giessformstoff nach einem der Ansprüche 1 bis 15, **dadurch gekennzeichnet, dass** das Aluminiumoxid eine mittlere Korngrösse $d_{50}$ von 3 bis 15 µm, vorzugsweise von 5 bis 10 µm aufweist.

**17.** Giessformstoff nach einem der Ansprüche 1 bis 16, **dadurch gekennzeichnet, dass** das Zirkonoxid eine mittlere Korngrösse $d_{50}$ von 3 bis 15 µm, vorzugsweise von 5 bis 10 µm aufweist.

**18.** Giessformstoff nach einem der Ansprüche 1 bis 17, **dadurch gekennzeichnet, dass** das Calciumaluminat eine mittlere Korngrösse $d_{50}$ von 5 bis 20 µm, vorzugsweise von 8 bis 12 µm aufweist.

**19.** Giessformstoff nach einem der Ansprüche 1 bis 18, **dadurch gekennzeichnet, dass** der Spinell eine mittlere Korngrösse $d_{50}$ von 3 bis 20 µm, vorzugsweise von 8 bis 12 µm aufweist.

**20.** Giessformstoff nach einem der Ansprüche 1 bis 19, **dadurch gekennzeichnet, dass** die Flüssigkeitskomponente Wasser, vorzugsweise entionisiertes oder destilliertes Wasser enthält.

**21.** Giessformstoff nach einem der Ansprüche 1 bis 20, **dadurch gekennzeichnet, dass** die Flüssigkeitskomponente einen Alkohol mit Siedepunkt unter 100 °C, vorzugsweise Ethanol, 1-Propanol, 2-Propanol oder tert. Butylalkohol enthält.

**22.** Fliessfähiger Schlicker erhalten durch Vermischen der Pulverkomponente mit der Flüssigkeitskomponente des Giessformstoffs nach einem der Ansprüche 1 bis 21.

**23.** Verwendung des Giessformstoffes nach einem der Ansprüche 1 bis 21 zum Vergiessen von Titan und Titanlegierungen.

**Claims**

**1.** A casting-mold material to manufacture casting molds casting high melting-point substances, said material comprising

    A) a powder component containing magnesium oxide and aluminum oxide, and

B) a liquid component,
**characterized in that**
C) the powder component additionally contains a calcium aluminate and an alkali fluoride or an earth alkali fluoride, and
D) the liquid component contains a polyelectrolyte and a basic component, this basic component determining the pH value of the liquid component between 10 and 14.

2. Casting-mold material as claimed in claim 1, **characterized in that** the powder component additionally contains zirconium oxide.

3. Casting-mold material as claimed in either of claims 1 and 2, **characterized in that** the basic component includes an alkali hydroxide, preferably lithium hydroxide.

4. Casting-mold material as claimed in one of claims 1 through 3, **characterized in that** the powder component additionally contains spinel.

5. Casting-mold material as claimed in one of claims 1 through 4, **characterized in that** the alkali fluoride is lithium fluoride or sodium fluoride.

6. Casting-mold material as claimed in one of claims 1 through 5, **characterized in that** the basic component determines the pH value between 11 and 13.

7. Casting-mold material as claimed in one of claims 1 through 6, **characterized in that** the powder component contains a proportion by weight of zirconium oxide of 0.5 to 20 %, preferably 1 to 10 %.

8. Casting-mold material as claimed in one of claims 1 through 7, **characterized in that** the powder component contains a proportion by weight of calcium aluminate of 5.0 to 30.0 %, preferably 10 to 20 %.

9. Casting-mold material as claimed in one of claims 1 through 8, **characterized in that** the powder component contains a proportion by weight of alkali fluoride or earth alkali fluoride of 0.5 to 20 %, preferably 1 to 10 %.

10. Casting-mold material as claimed in one of claims 1 through 9, **characterized in that** the powder component contains a proportion by weight of spinel of 0.1 to 20.0 %, preferably 1 to 10 %.

11. Casting-mold material as claimed in one of claims 1 through 10, **characterized in that** the liquid component contains a proportion by weight a polyelectrolyte of 0.2 to 10.0 %, preferably 0.5 to 3.0 %.

12. Casting-mold material as claimed in one of claims 1 through 11, **characterized in that** the liquid component contains a proportion by weight of the basic component, preferably an alkali hydroxide, of 0.5 to 10.0 %, preferably 1 to 9 %.

13. Casting-mold material as claimed in one of claims 1 through 12, **characterized in that** the polyelectrolyte contains a polycarboxylic acid, preferably a polyacrylic acid or polymethacrylic acid or one of their salts.

14. Casting-mold material as claimed in one of claims 1 through 13, **characterized in that** the magnesium oxide is present in coarse and in fine form, the median grain size $d_{50}$ of the coarse form being 100 to 170 microns, preferably 110 to 140 microns, and the median grain size $d_{50}$ of the fine form being less than 10 microns, preferably 3 to 7 microns.

15. Casting-mold material as claimed in claim 14, **characterized in that** the magnesium oxide is present in a ratio by weight of coarse form to fine form of 9:1 to 5:1, preferably 8:1 to 6:1.

16. Casting-mold material as claimed in one of claims 1 through 15, **characterized in that** the aluminum oxide exhibits a median grain size $d_{50}$ of 3 to 15 microns, preferably 5 to 10 microns.

17. Casting-mold material as claimed in one of claims 1 through 16, **characterized in that** the median grain size $d_{50}$ of the zirconium oxide is 3 to 15 microns, preferably 5 to 10 microns.

**18.** Casting-mold material as claimed in one of claims 1 through 17, **characterized in that** the median grain size $d_{50}$ of the calcium aluminate is 5 to 20 microns, preferably 8 to 12 microns.

**19.** Casting-mold material as claimed in one of claims 18, **characterized in that** the median grain size $d_{50}$ of the spinel is 3 to 20 microns, preferably 8 to 12 microns.

**20.** Casting-mold material as claimed in one of claims 1 through 19, **characterized in that** the liquid component contains water, preferably de-ionized or distilled water.

**21.** Casting-mold material as claimed in one of claims 1 through 20, **characterized in that** the liquid component contains an alcohol having a boiling point lower than 100 °C, preferably ethanol, 1-propanol, 2-propanol or tertiary butyl alcohol.

**22.** A fluid slip, prepared by mixing the powder component with the liquid component of the casting-mold material claimed in one of claims 1 through 21.

**23.** Application of the casting-mold material claimed in one of claims 1 through 22 for casting titanium and titanium alloys.

**Revendications**

**1.** Matière de moulage destinée à la fabrication de moules permettant de mouler des matériaux à point de fusion élevé, laquelle comprend

A) un composant pulvérisé qui contient de l'oxyde de magnésium et de l'oxyde d'aluminium; et
B) un composant liquide,
**caractérisée en ce que**
C) le composant pulvérisé contient en outre un aluminate de calcium et un fluorure alcalin ou alcalino-terreux; et
D) le composant liquide contient un polyélectrolyte et un composant basique, le composant basique ajustant le pH du composant liquide entre 10 et 14.

**2.** Matière de moulage selon la revendication 1, **caractérisée en ce que** le composant pulvérisé contient en outre de l'oxyde de zircon.

**3.** Matière de moulage selon la revendication 1 ou 2, **caractérisée en ce que** le composant basique comprend un hydroxyde alcalin, de préférence de la lithine.

**4.** Matière de moulage selon l'une des revendications 1 à 3, **caractérisée en ce que** le composant pulvérisé contient en outre du spinelle.

**5.** Matière de moulage selon l'une des revendications 1 à 4, **caractérisée en ce que** le fluorure alcalin est du fluorure de lithium ou du fluorure de sodium.

**6.** Matière de moulage selon l'une des revendications 1 à 5, **caractérisée en ce que** le composant basique ajuste le pH du composant liquide entre 11 et 13.

**7.** Matière de moulage selon l'une des revendications 1 à 6, **caractérisée en ce que** le composant pulvérisé contient un pourcentage pondéral d'oxyde de zircon compris entre 0,5 et 20,0 %, de préférence entre 1 et 10 %.

**8.** Matière de moulage selon l'une des revendications 1 à 7, **caractérisée en ce que** le composant pulvérisé contient un pourcentage pondéral d'aluminate de calcium compris entre 5,0 et 30,0 %, de préférence entre 10 et 20 %.

**9.** Matière de moulage selon l'une des revendications 1 à 8, **caractérisée en ce que** le composant pulvérisé contient un pourcentage pondéral de fluorure alcalin ou de fluorure alcalino-terreux compris entre 0,5 et 20,0 %, de préférence entre 1 et 10 %.

**10.** Matière de moulage selon l'une des revendications 1 à 9, **caractérisée en ce que** le composant pulvérisé contient un pourcentage pondéral de spinelle compris entre 0,1 et 20,0 %, de préférence entre 1 et 10 %.

11. Matière de moulage selon l'une des revendications 1 à 10, **caractérisée en ce que** le composant liquide contient un pourcentage pondéral de polyélectrolyte compris entre 0,2 et 10,0 %, de préférence entre 0,5 et 3,0 %.

12. Matière de moulage selon l'une des revendications 1 à 11, **caractérisée en ce que** le composant liquide contient un pourcentage pondéral d'un composant basique, de préférence d'un hydroxyde alcalin, compris entre 0,5 et 10,0 %, de préférence entre 1 et 9 %.

13. Matière de moulage selon l'une des revendications 1 à 12, **caractérisée en ce que** le polyélectrolyte contient un acide polycarboxylique, de préférence un acide polyacrylique ou un acide polyméthacrylique, ou l'un de ses sels.

14. Matière de moulage selon l'une des revendications 1 à 13, **caractérisée en ce que** l'oxyde de magnésium se présente sous forme grossière et sous forme fine, la forme grossière présentant des particules d'un diamètre moyen $d_{50}$ compris entre 100 et 170 µm, de préférence entre 110 et 140 µm, et la forme fine des particules présentant un diamètre moyen $d_{50}$ inférieur à 10 µm, de préférence compris entre 3 et 7 µm.

15. Matière de moulage selon la revendication 14, **caractérisée en ce que** l'oxyde de magnésium sous forme grossière et sous forme fine se présente dans un rapport pondéral compris entre 9:1 et 5:1, de préférence entre 8:1 et 6:1.

16. Matière de moulage selon l'une des revendications 1 à 15, **caractérisée en ce que** l'oxyde d'aluminium présente des particules d'un diamètre moyen $d_{50}$ compris entre 3 et 15 µm, de préférence entre 5 et 10 µm.

17. Matière de moulage selon l'une des revendications 1 à 16, **caractérisée en ce que** l'oxyde de zircon présente des particules d'un diamètre moyen $d_{50}$ compris entre 3 et 15 µm, de préférence entre 5 et 10 µm.

18. Matière de moulage selon l'une des revendications 1 à 17, **caractérisée en ce que** l'aluminate de calcium présente des particules d'un diamètre moyen $d_{50}$ compris entre 5 et 20 µm, de préférence entre 8 et 12 µm.

19. Matière de moulage selon l'une des revendications 1 à 18, **caractérisée en ce que** le spinelle présente des particules d'un diamètre moyen $d_{50}$ compris entre 3 et 20 µm, de préférence entre 8 et 12 µm.

20. Matière de moulage selon l'une des revendications 1 à 19, **caractérisée en ce que** le composant liquide contient de l'eau, de préférence de l'eau déionisée ou de l'eau distillée.

21. Matière de moulage selon l'une des revendications 1 à 20, **caractérisée en ce que** le composant liquide contient un alcool avec un point d'ébullition inférieur à 100°C, de préférence de l'éthanol, du propanol-1 du propanol-2 ou de l'alcool tertiobutylique.

22. Coulis apte à l'écoulement obtenu en mélangeant le composant pulvérisé et le composant liquide constituant la matière de moulage selon l'une des revendications 1 à 21.

23. Utilisation de la matière de moulage selon l'une des revendications 1 à 21 afin de procéder au moulage de titane et d'alliages de titane.